Europäisches Patentamt

European Patent Office

Office européen des brevets

(11) Numéro de publication : **0 378 017 B1**

(12) **FASCICULE DE BREVET EUROPEEN**

(45) Date de publication du fascicule du brevet :
**15.04.92 Bulletin 92/16**

(51) Int. Cl.$^5$ : **G01B 7/02, G01B 7/14**

(21) Numéro de dépôt : **89403422.2**

(22) Date de dépôt : **11.12.89**

(54) **Chaîne de mesure dimensionnelle capacitive à sortie linéaire.**

(30) Priorité : **09.12.88 FR 8816244**

(43) Date de publication de la demande :
**18.07.90 Bulletin 90/29**

(45) Mention de la délivrance du brevet :
**15.04.92 Bulletin 92/16**

(84) Etats contractants désignés :
**CH DE ES GB IT LI**

(56) Documents cités :
**FR-A- 2 608 751**
**GB-A- 1 047 600**
**US-A- 3 628 136**
**US-A- 4 067 225**
**US-A- 4 071 820**

(73) Titulaire : **OFFICE NATIONAL D'ETUDES ET DE RECHERCHES AEROSPATIALES(O.N.E.R.A.) Etablissement Public de l'Etat 29 avenue de la Divison Leclerc**
**F-92320 Châtillon (FR)**

(72) Inventeur : **BRUERE, Alain**
**63 Avenue Jean Jaurès**
**F-92290 Chatenay Malabry (FR)**
Inventeur : **GALAUD, Claude**
**18, Rue Fabre d'Eglantine**
**F-75012 Paris (FR)**

(74) Mandataire : **Cabinet Martinet & Lapoux**
**BP 405**
**F-78055 Saint Quentin en Yvelines Cédex (FR)**

## Description

La présente invention concerne de manière générale le domaine de la métrologie dimensionnelle sans contact. Plus particulièrement, l'invention concerne une chaîne de mesure dimensionnelle capacitive conçue pour produire directement un signal de mesure représentant linéairement une distance à mesurer.

Dans ce domaine de la technique, deux types de dispositifs de mesure sont principalement utilisés actuellement :

– des ponts de mesure d'impédance, et

– les chaînes de mesure capacitive.

Les ponts de mesure d'impédance de type manuel ou automatique, sont lourds d'emploi, limités en résolution et utilisables uniquement en régime statique. De plus, ils sont coûteux et non linéaires en mesure dimensionnelle.

Une chaîne de mesure capacitive telle que celles décrites par la demande de brevet français FR-A-2608751 délivre un signal de mesure représentatif d'une capacité. Le signal de mesure est inversement proportionnel à la distance à mesurer et ne représente donc pas linéairement cette distance. Un dispositif de linéarisation analogique ou numérique équipe généralement la chaîne de mesure afin de linéariser le signal de mesure. Le dispositif de linéarisation présente l'inconvénient d'introduire des erreurs supplémentaires et consécutivement de réduire les performances de la mesure dimensionnelle.

Cet inconvénient est évité dans la chaîne de mesure de capacité décrite dans le brevet US-A-4067225. La chaîne comprend un oscillateur fournissant une tension de référence alternative et alimentant un condensateur standard. Une borne de sortie de l'oscillateur est couplée à travers le condensateur standard à une entrée d'un premier amplificateur, et est couplée par un conducteur interne d'un câble coaxial à une électrode centrale d'un capteur capacitif. Une autre borne de sortie de l'oscillateur est couplée directement à une autre entrée du premier amplificateur et à un anneau de garde du capteur à travers un conducteur externe de blindage du câble coaxial.

La chaîne de mesure dans le brevet US-A-4067225 inclut un démodulateur qui est connecté à la sortie du premier amplificateur, un filtre passe-bas, un autre amplificateur, un amplificateur à gain variable, un détecteur crête-à-crête et un instrument indicateur pour mesurer la distance entre la face de capteur et une pièce ou corps conducteur.

En fonctionnement, la tension de sortie du premier amplificateur est dans un rapport avec la tension d'entrée du premier amplificateur qui est en proportion avec le rapport de capacité entre le condensateur standard et le condensateur défini par l'espace entre l'électrode de capteur centrale et le corps conducteur, la distance de cet espace étant à mesurer. Puisque la tension de sortie de l'oscillateur est constante et connue, le courant à travers le condensateur standard est constant et la tension à la sortie du premier amplificateur sera inversement proportionnelle à la capacité du condensateur du capteur, et donc directement proportionnelle à la distance à mesurer.

Une autre chaîne de mesure de capacité/distance qui inclut également un oscillateur de tension de référence couplé à travers un condensateur de référence ou standard à l'entrée d'un amplificateur qui est connecté au capteur capacitif, est également décrite dans le brevet GB-A-1047600.

Néanmoins, la tension de mesure sortant des chaînes de mesure antérieures n'est pas précisément stabilisée en température et dans le temps. La tension de mesure à partir de laquelle la distance est déduite, dépend d'un courant quasiment constant alimentant le capteur et variant en dépendance avec la température et le temps.

L'invention vise à fournir des chaînes de mesure dimensionnelle capacitive à sortie linéaire remédiant aux inconvénients de la technique antérieure évoqués ci-dessus, c'est-à-dire à stabiliser la mesure de tension dans une chaîne de mesure dans laquelle la mesure de tension est proportionnelle à la distance à mesurer et ainsi inversement proportionnelle à la capacité du capteur.

A cette fin, une chaîne de mesure dimensionnelle capacitive à sortie linéaire selon l'invention comportant un capteur capacitif formé d'une électrode de détection et d'une électrode de garde entourant l'électrode de détection, ladite électrode de détection étant placée en face d'une pièce conductrice afin de définir une capacité de capteur, un condensateur de référence alimenté par une source de tension alternative de référence délivrant un signal de référence, des moyens pour produire un signal modulé en amplitude en fonction d'une différence entre des courants traversant respectivement la capacité de capteur et le condensateur de référence, et des moyens pour amplifier et démoduler ledit signal modulé en amplitude en un signal de mesure de distance linéairement représentatif d'une distance entre l'électrode de détection et ladite pièce conductrice, est caractérisée en ce qu'elle comprend deux sources de tension alternative fournissant des signaux qui ont une même amplitude, qui ont des fréquences et phases égales à celles du signal de référence et qui alimentent respectivement l'électrode de détection et l'électrode de garde, lesdites deux sources étant commandées en niveau par ledit signal de mesure de distance.

Comparativement à une chaîne de mesure dimensionnelle capacitive à sortie linéarisée selon la technique antérieure parmi les plus performantes, une chaîne de mesure selon l'invention associée à un capteur capacitif de caractéristiques analogues présente une étendue de mesure de l'ordre de quatre fois supérieure et réduit les erreurs de linéarité par un facteur sensiblement égal à 8.

La tension alimentant le capteur est asservie par la tension de mesure sortant de la chaîne, et par conséquent, le capteur est alimenté avec une charge électrique constante, c'est-à-dire une quantité électrique constante, et non pas avec un courant quasi-constant. La chaîne selon l'invention a une meilleure linéarité et une plus grande stabilité en température et temps.

D'autres avantages et caractéristiques de l'invention apparaîtront plus clairement à la lecture de la description suivante de plusieurs réalisations de l'invention en référence aux dessins annexés correspondants dans lesquels :
  – la Fig. 1 est un bloc-diagramme d'une chaîne de mesure dimensionnelle capacitive à sortie linéarisée selon la technique antérieure ;
  – la Fig. 2 est un bloc-diagramme de principe d'une chaîne de mesure dimensionnelle capacitive à sortie linéaire selon l'invention ; et
  – la Fig. 3 est un bloc-diagramme détaillé d'une réalisation préférée d'une chaîne de mesure selon l'invention.

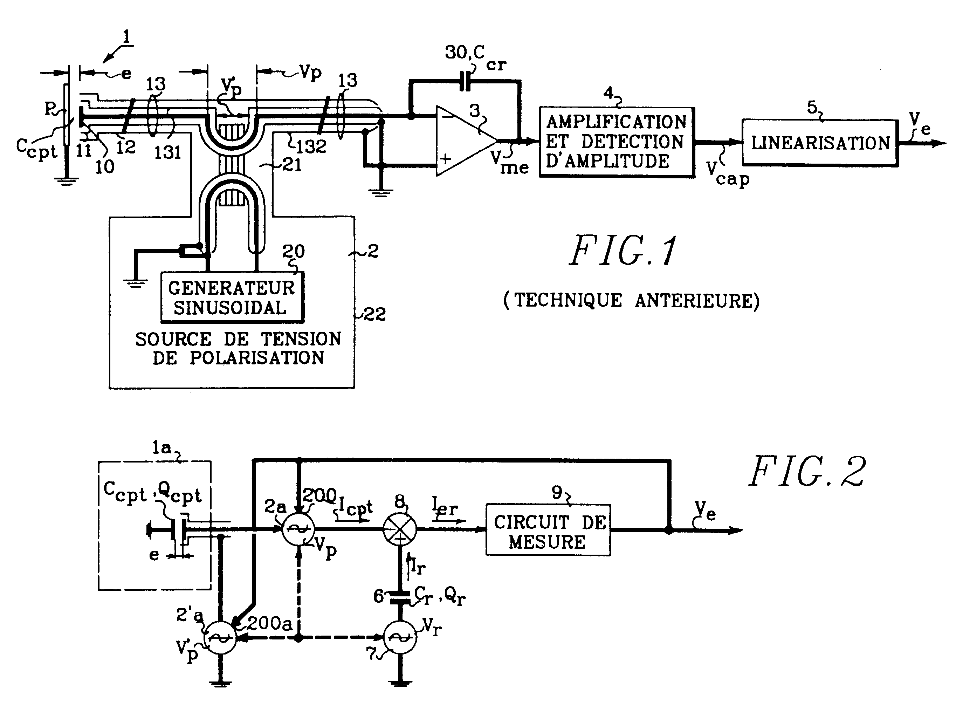

En référence à la Fig. 1, une chaîne de mesure dimensionnelle capacitive à sortie linéarisée selon la technique antérieure comprend un capteur capacitif 1 formé d'une électrode de détection et d'une électrode de garde 11 entourant l'électrode de détection, une source de tension de polarisation 2, des liaisons électriques triaxiales 13, un amplificateur de charge 3, un circuit d'amplification et de détection d'amplitude 4, et un dispositif de linéarisation 5.

La chaîne de mesure a pour fonction de produire un signal de mesure de distance $V_e$ représentatif d'une distance e entre l'électrode centrale 10 du capteur 1 et une pièce conductrice P disposée en regard du capteur 1, parallèlement à l'électrode 10, et reliée à une borne de masse.

La source de tension de polarisation 2 est incluse en série entre le capteur 1 et l'amplificateur de charge 3 et délivre un premier signal sinusoïdal $V_p$ pour polariser l'électrode de détection 10 du capteur 1. La source 2 délivre, en outre, un deuxième signal sinusoïdal $V'_p$, dont l'amplitude et la phase sont les mêmes que celles du signal $V_p$, pour polariser l'électrode de garde 11 du capteur et un conducteur de garde 131 des liaisons triaxiales 13. La source de tension 2 comprend un générateur sinusoïdal 20 et un transformateur 21 dont les enroulements primaire et secondaire sont réalisés en câbles coaxiaux. L'enroulement primaire de transformateur 21 est alimenté par le générateur sinusoïdal 20. L'enroulement secondaire du transformateur 21 délivre les signaux de polarisation $V_p$, $V'_p$ et est relié au capteur 1 et à l'amplificateur de charge 3 à travers les liaisons triaxiales 13. Le conducteur central, qui forme l'âme du câble coaxial dans les liaisons 13, est relié à l'une de ses extrémités à l'électrode de détection 10, et à l'autre extrémité, à une entrée inverse (-) de l'amplificateur de charge 3. De même, le blindage du câble coaxial dans les liaisons 13 est relié à l'électrode de garde 11 et à une entrée directe (+) de l'amplificateur de charge 3 et à la masse. On réalise ainsi une garde électrique totale des circuits assurant la polarisation du capteur, depuis l'amplificateur de charge jusqu'à l'électrode de détection. Le conducteur de masse 132 des liaisons triaxiales 13 est relié à la borne de masse et à l'électrode 12 du capteur 1. Un blindage électromagnétique 22 de la source de tension 2 est relié à la borne de masse et au conducteur de masse 132 des liaisons triaxiales 13 de manière à rendre la liaison imperméable aux rayonnements électromagnétiques.

L'amplificateur 3 est du type amplificateur opérationnel. Une entrée directe (+) de l'amplificateur 3 est connectée à la borne de masse. Un condensateur 30 de capacité $C_{cr}$ est placé en contre-réaction entre une sortie et l'entrée inverse (-) de l'amplificateur 3.

L'amplificateur 3 délivre un signal sinusoïdal de mesure $V_{me}$ modulé en amplitude en fonction d'une capacité de capteur $C_{cpt}$ qui est essentiellement déterminée par la distance e entre l'électrode centrale 10 du capteur 1 et la pièce P en regard de celui-ci. Le signal $V_{me}$ est exprimé par l'égalité suivante :

$$V_{me} = V_p . C_{cpt}/C_{cr}.$$

Le circuit d'amplification et de détection d'amplitude 4 produit à partir du signal $V_{me}$ un signal de mesure de capacité $V_{cap}$ dont l'amplitude est proportionnelle à la capacité de capteur $C_{cpt}$.

La distance e à mesurer est une fonction inverse de la capacité de capteur $C_{cpt}$ de sorte que le signal $V_{cap}$ produit par le circuit 4 n'est pas linéairement représentatif de la distance e.

Le dispositif de linéarisation 5 est, par exemple, constitué d'un calculateur numérique équipé en amont d'un circuit d'échantillonnage et de numérisation. Le dispositif 5 est programmé pour le calcul d'une fonction inverse de type $F(x)=1/x$, où x est la variable. Le signal $V_{cap}$ est appliqué à l'entrée du dispositif de linéarisation 5. Le dispositif 5 délivre le signal de mesure de distance $V_e$ linéairement représentatif de la distance e.

En référence à la Fig. 2, il est décrit le principe de fonctionnement d'une chaîne de mesure dimensionnelle capacitive à sortie linéaire selon l'invention.

La chaîne de mesure comprend un capteur capacitif 1a comportant une électrode de garde et représenté schématiquement par un condensateur de capteur ayant une capacité $C_{cpt}$, deux sources de tension alternative de polarisation 2a, 2'a, un condensateur de référence 6 de capacité $C_r$, une source de tension alternative de référence 7, un soustracteur de courants 8, et un circuit de mesure 9.

Les sources de tension alternative 2a, 2'a et 7 fonctionnent en synchronisme et fournissent respectivement : la tension de polarisation $V_p$ pour l'électrode de détection, la tension de polarisation $V'_p$ pour l'électrode de garde, et une tension de référence $V_r$. Les tensions $V_p$, $V'_p$ et $V_r$ ont la même fréquence, leur forme d'onde est sinusoïdale ou carrée et elles sont synchrones en phase. Les tensions $V_p$ et $V'_p$ ont la même amplitude.

Les sources de tension de polarisation 2a et 2'a sont du type à niveau commandé. L'amplitude des tensions $V_p$ et $V'_p$ dépend d'un signal de commande de niveau appliqué à une entrée 200 de la source 2a et à une entrée 200a de la source 2'a.

Selon l'invention, le signal de mesure de distance $V_e$ disponible en sortie du circuit de mesure 9 est appliqué à l'entrée 200 de la source 2a et à l'entrée 200a de la source 2'a et asservit le niveau des tensions $V_p$ et $V'_p$ selon la relation :

$$V_p = V'_p = K_p.V_e,$$

où $K_p$ est un coefficient de proportionnalité.

Selon une variante de réalisation, le signal de mesure de distance $V_e$ commande les sources 2a et 2'a non pas directement, comme montré à la Fig. 2, mais à travers un circuit de filtrage et de correction de phase destiné à améliorer la stabilité de la chaîne de mesure.

Le capteur capacitif 1a et le condensateur de référence 6 de capacité $C_r$ sont traversés par des courants $I_{cpt}$ et $I_r$ et ont des quantités de charge électrique $Q_{cpt}$ et $Q_r$, respectivement. Les courants $I_{cpt}$ et $I_r$ alimentent respectivement des entrées inverse - et directe + du soustracteur de courants 8.

Le soustracteur 8 produit un courant d'erreur $I_{er}=I_r-I_{cpt}$. Le courant d'erreur $I_{er}$ est fourni à une entrée du circuit de mesure 9.

Le circuit de mesure 9 comprend essentiellement un amplificateur opérationnel à contre-réaction capacitive et des moyens d'amplification de niveau, de démodulation synchrone et de filtrage (non représentés) afin de produire le signal de mesure de distance $V_e$ représentatif de la distance e à mesurer.

Lorsque la chaîne de mesure fonctionne en régime statique ou en régime dynamique, dans son domaine de fréquence, le courant d'erreur $I_{er}$ fourni par le soustracteur 8 tend vers une amplitude nulle et les quantités de charges électriques $Q_{cpt}$ et $Q_r$ respectivement de la capacité de capteur 1 et du condensateur de référence 6 tendent vers la même valeur. Les charges $Q_{cpt}$ et $Q_r$ sont exprimées par les égalités

$$Q_{cpt} = C_{cpt}.V_p \text{ et } Q_r = C_r.V_r$$

et il vient donc la relation :

$$V_p = V_r.(C_r/C_{cpt}).$$

De cette relation est déduite l'expression suivante du signal de mesure de distance $V_e$ :

$$V_e = (V_r/K_p).(C_r/C_{cpt}),$$

où $V_r$ représente l'amplitude du signal de référence.

Cette expression montre que le signal $V_e$ est inversement proportionnel à la capacité de capteur $C_{cpt}$. Le signal de mesure de distance $V_e$ dans une chaîne de mesure selon l'invention est donc bien directement proportionnel à la distance e.

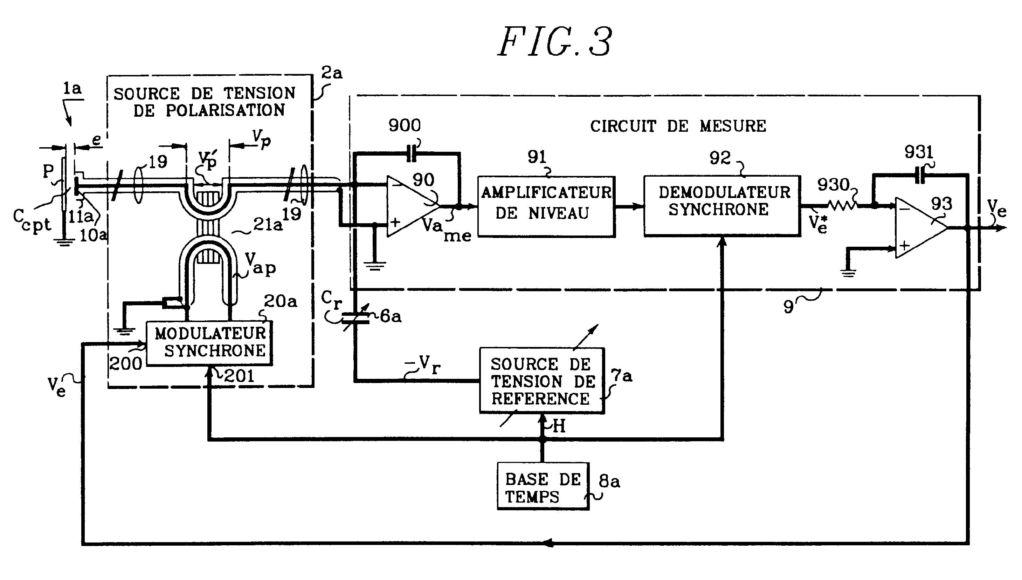

En référence à la Fig. 3, une réalisation préférée de la chaîne de mesure selon l'invention est maintenant décrite de manière détaillée.

La chaîne de mesure comprend un capteur capacitif 1a, une source de tension de polarisation 2a, un câble coaxial 19, un condensateur de référence 6a associé à une source de tension de référence 7a, une base de temps 8a, et un circuit de mesure 9.

Le capteur capacitif 1a se différencie du capteur capacitif 1 montré à la Fig. 1 en ce qu'il ne comprend pas d'électrode de masse 12 et est de ce fait moins coûteux. Une électrode de détection centrale 10a et une électrode de garde 11a sont reliées à des premières extrémités respectivement d'un conducteur central et d'un conducteur extérieur de blindage du câble coaxial 19.

La source de polarisation 2a comprend un modulateur synchrone $20_a$ et un transformateur à câble coaxial 21a.

Le modulateur synchrone 20a reçoit le signal de mesure de distance $V_e$ via une entrée de commande de niveau 200 et un signal d'horloge H via une entrée d'horloge 201. Le signal d'horloge H est produit par la base de temps 8a. Le modulateur 20a délivre un signal alternatif $Va_p$ synchrone avec le signal d'horloge H. Le signal $Va_p$ alimente un enroulement primaire du transformateur 21a.

Le transformateur à câble coaxial 21a est analogue au transformateur 21 montré à la Fig. 1. De préférence, un enroulement secondaire du transformateur 21a est constitué par une portion du câble coaxial 19 enroulée autour d'un noyau magnétique du transformateur 21a. L'âme de l'enroulement secondaire du transformateur 21a délivre la tension de polarisation $V_p$ de l'électrode de détection 10a du capteur. Le blindage de l'enroulement secondaire délivre la tension de polarisation $V'_p$ de l'électrode de garde. Cette disposition permet de réaliser les sources de tension 2a et 2'a de la Fig. 2. Le condensateur 6a et la source de référence 7a sont de préférence de type réglable afin d'autoriser des ajustements de la valeur de la capacité $C_r$ du condensateur 6a et de l'amplitude de la tension de référence $-V_r$ fournie par la source de référence 7a.

La source de tension de référence 7a reçoit le signal d'horloge H fourni par la base de temps 8a et produit la tension alternative de référence $-V_r$, qui est de même nature que les tensions de polarisation d'électrodes de détection et de garde $V_p$ et $V'_p$. La tension de référence $-V_r$ a la même fréquence que les tensions de polarisation d'électrodes de détection et de garde $V_p$ et $V'_p$, mais est en opposition de phase par rapport à celles-ci afin de produire un courant d'erreur, par addition de deux courants de signes opposés, au niveau d'une entrée inverse (-) d'un amplificateur de charge 90 inclus dans le circuit de mesure 9.

Outre l'amplificateur de charge 90, le circuit de mesure 9 comprend un amplificateur de niveau 91, un démodulateur synchrone 92, et un intégrateur 93.

L'amplificateur de charge 90 est constitué d'un amplificateur opérationnel à contre-réaction capacitive. Une entrée inverse (-) de l'amplificateur 90 est reliée à l'âme d'une seconde extrémité du câble coaxial 19 et à travers le condensateur 6a à une sortie de la source de tension de référence 7a. Une entrée directe (+) de l'amplificateur 90 est reliée à la borne de masse de même que le conducteur de garde du câble 19. Un condensateur 900 est placé en contre-réaction entre une sortie et l'entrée inverse (-) de l'amplificateur 90. L'amplificateur 90 délivre un signal de mesure $Va_{me}$ ayant, comme fréquence fondamentale, la fréquence du signal d'horloge H.

L'amplificateur de niveau 91 et le démodulateur synchrone 92 sont disposés en cascade entre l'amplificateur de charge 90 et l'intégrateur 93. L'amplificateur de niveau 91 a pour fonction d'amplifier le signal de mesure $Va_{me}$ à un niveau suffisamment élevé pour lui permettre d'être traité par le démodulateur synchrone 92. Le démodulateur synchrone 92 est commandé par le signal d'horloge H afin de démoduler le signal de mesure $Va_{me}$ en un signal $V^*_e$ à partir duquel est déduit, par intégration, le signal de mesure de distance $V_e$.

L'intégrateur 93 est constitué classiquement d'un amplificateur opérationnel et a pour fonction de produire le signal de mesure de distance $V_e$ par intégration du signal $V^*_e$. Une fonction secondaire de l'intégrateur 93 est de garantir une stabilité du fonctionnement de la chaîne de mesure en introduisant un retard de phase de $-\pi/2$ dans la boucle d'asservissement. L'intégrateur 93 reçoit le signal $V^*_e$ par une entrée inverse (-), à travers une résistance 930. Une entrée directe (+) de l'intégrateur 93 est reliée à la borne de masse. Un condensateur 931 est placé en contre-réaction entre une sortie et l'entrée inverse (-) de l'intégrateur 93. L'intégrateur 93 délivre le signal de mesure de distance $V_e$.

Les caractéristiques principales de la chaîne de mesure réalisée, associée à un capteur capacitif dont l'électrode de détection a un diamètre de 1 mm et l'anneau de garde a une largeur de 1,25 mm, sont données ci-après :

    – gamme de mesure 0 à 2,5 mm ;

$$- \text{ linéarité } < \pm 0,15 \text{ } \mu\text{m entre } 0 \text{ et } 1 \text{ mm ;}$$
$$< \pm 0,5 \text{ } \mu\text{m entre } 1 \text{ et } 2,5 \text{ mm ;}$$

    – dérive en température $< 10^{-5}$ de l'étendue de mesure / °C ;

    – résolution dans une bande de fréquence de 0 à 1 Hz $< 20$ nm correspondant à une capacité de $2.10^{-19}$ F ;

    – bande passante du continu à 200 Hz.

A titre de comparaison, les ponts de mesure d'impédances connus reposant sur l'utilisation de courants de Foucault et associés à un capteur inductif ayant les mêmes dimensions que le capteur capacitif ci-dessus ont les caractéristiques suivantes (Kaman Sciences Corporation) :

    – gamme de mesure 0 à 1,27 mm ;

    – linéarité $< \pm 12$ $\mu$m ;

    – résolution $< 0,12$ $\mu$m.

## Revendications

1. Chaîne de mesure dimensionnelle capacitive à sortie linéaire comportant un capteur capacitif (1, 1a) formé d'une électrode de détection (10) et d'une électrode de garde (11) entourant l'électrode de détection, ladite électrode de détection (10) étant placée en face d'une pièce conductrice (P) afin de définir une capacité de capteur ($C_{cpt}$), un condensateur de référence (6, 6a) alimenté par une source de tension alternative de référence (7, 7a) délivrant un signal de référence (Vr), des moyens (90) pour produire un signal modulé en amplitude ($Va_{me}$) en fonction d'une différence ($I_{er}=I_r-I_{cpt}$) entre des courants traversant respectivement la capacité de capteur ($C_{cpt}$) et le condensateur de référence (6, 6a), et des moyens pour amplifier et démoduler (9) ledit signal modulé en amplitude ($Va_{me}$) en un signal de mesure de distance ($V_e$) linéairement représentatif d'une distance (e) entre l'électrode de détection (10) et ladite pièce conductrice (P), ladite chaîne comprend deux sources de tension alternative (2, 2a, 2'a) fournissant des signaux ($V_p$, $V'_p$) qui ont une même amplitude, qui ont des fréquences et phases égales à celles du signal de référence et qui alimentent respectivement l'électrode de détection (10) et l'électrode de garde (11), lesdites deux sources (2, 2a, 2'a) étant commandées en niveau par ledit signal de mesure de distance ($V_e$).

2. Chaîne de mesure conforme à la revendication 1, caractérisée en ce qu'elle comprend, en outre,

une base de temps (8a) pour produire un signal d'horloge (H) pour synchroniser le fonctionnement des trois sources de tension (2a, 2'a, 7a) et aussi des moyens de démodulation (92) inclus dans les moyens pour amplifier et démoduler (9), et

des moyens (93) pour intégrer le signal de mesure de distance ($V_e$).

3. Chaîne de mesure conforme à la revendication 1 ou 2, caractérisée en ce que le condensateur de référence (6a) est de type ajustable.

4. Chaîne de mesure conforme à l'une quelconque des revendications 1 à 3, caractérisée en ce que la source de référence (7a) est de type à niveau ajustable.

5. Chaîne de mesure conforme à l'une quelconque des revendications 1 à 4, caractérisée en ce que

lesdites deux sources de tension alternative (2, 2a), (2'a) sont constituées de l'enroulement secondaire d'un transformateur (21) ayant des enroulements primaire et secondaire réalisés en câbles coaxiaux respectifs,

l'enroulement secondaire est disposé en série entre le capteur (1a) et les moyens pour produire (90) à travers des liaisons électriques (19),

un conducteur central du câble coaxial d'enroulement secondaire a une extrémité reliée à l'électrode de détection (10) et a une autre extrémité reliée à une première entrée (-) des moyens pour produire (90),

un blindage du câble coaxial de l'enroulement secondaire a une extrémité reliée à l'électrode de garde (11) et a une autre extrémité reliée à une seconde entrée (+) des moyens pour produire (90) et

un conducteur central du câble coaxial d'enroulement primaire du transformateur (21) est alimenté par ledit signal produit de mesure de distance à travers un modulateur synchrone (20a) synchronisé avec la source de référence (7a).

6. Chaîne de mesure selon la revendication 5, caractérisée en ce que les liaisons sont des câbles coaxiaux (19).

7. Chaîne de mesure selon la revendication 5, caractérisée en ce que les liaisons sont des liaisons triaxiales (13).

8. Chaîne de mesure selon la revendication 6, caractérisée en ce que la pièce (P), la seconde entrée (+) des moyens pour produire (90) et l'une des extrémités d'un blindage du câble coaxial de l'enroulement primaire du transformateur (21) sont reliées à une borne de masse.

## Patentansprüche

1. Kapazitive Meßkette mit linearem Ausgang mit einem kapazitiven Meßfühler (1, 1a), der aus einer Detektierelektrode (10) und einer Sicherheitselektrode (11) um die Detektierelektrode gebildet ist, wobei die Detektierelektrode (10) gegenüber einem Leiter (P) angeordnet ist, um eine Meßkapazität ($C_{cpt}$) zu definieren, mit einem Referenzkondensator (6, 6a), der von einer Referenz-Wechselspannungsquelle (7, 7a), die ein Referenzsignal (Vr) abgibt, versorgt wird, Einrichtungen (90) zur Erzeugung eines amplitudenmodulierten Signals ($Va_{me}$) als Funktion einer Differenz ($I_{er} = I_r-I_{cpt}$) zwischen den Strömen, die jeweils die Meßkapazität ($C_{cpt}$) und den Referenzkondensator (6, 6a) durchfließen, und Einrichtungen zum Verstärken und Demodulieren (9) des amplitudenmodulierten Signals ($Va_{me}$) in ein lineares Distanzmeßsignal ($V_e$) entsprechend dem Abstand (e) zwischen der Detektierelektrode (10) und dem Leiter (P), wobei die Kette zwei Wechselspannungsquellen (2, 2a, 2'a), die Signale ($V_p V'_p$) derselben Amplitude und mit der gleichen Frequenz und Phase wie die des Referenzsignalsliefern und die jeweils die Detektierelektrode (10) und die Sicherheitselektrode (11) versorgen, wobei die beiden Quellen (2, 2a, 2'a) durch das Distanzmeßsignal ($V_e$) im Pegel gesteuert werden, aufweist.

2. Meßkette nach Anspruch 1, dadurch gekennzeichnet, daß sie außerdem eine

Zeitbasis (8a) zur Erzeugung eines Zeitsignals (H) zur Synchronisation der funktion der drei Spannungsquellen (2a, 2'a, 7a) und Demodulationseinrichtungen (92), die in den Einrichtungen zur Verstärkung und Demodulation (9) enthalten sind, und

Einrichtungen (93) zur Integration des Distanzmeßsignals (Ve) aufweist.

3. Meßkette nach Anspruch 1 oder 2, dadurch gekennzeichnet, daß der Referenzgenerator (6a) einstellbar ist.

4. Meßkette nach einem der Ansprüche 1 bis 3, dadurch gekennzeichnet, daß die Referenzquelle (7a) im Pegel einstellbar ist.

5. Meßkette nach einem der Ansprüche 1 bis 4, dadurch gekennzeichnet, daß

die beiden Wechselspannungsquellen (2, 2a), (2′a) aus der Sekundärwicklung eines Transformators (21), dessen Primär- und Sekundärwicklungen aus Koaxialkabeln gebildet sind, bestehen, wobei

die Sekundärwicklung in Reihe zwischen dem Meßfühler (la) und den Erzeugungseinrichtungen (90) über elektrische Leitungen (19) geschaltet ist,

ein zentraler Leiter des Koaxialkabels der Sekundärwicklung ein Ende, das mit der Detektierelektrode (10) und ein anderes Ende, das mit dem ersten Eingang (-) der Erzeugungseinrichtungen (90) verbunden ist, aufweist,

eine Abschirmung des Koaxialkabels der Sekundärwicklung ein Ende, das mit der Sicherheitselektrode (11), und ein anderes Ende, das mit dem zweiten Eingang (+) der Erzeugungseinrichtungen (90) verbunden ist, aufweist und

ein zentraler Leiter des Koaxialkabels der Primärwicklung des Transformators (21) von dem Distanzmeßsignal über einen synchronen Modulator (20a), der mit der Referenzquelle (7a) synchronisiert ist, versorgt wird.

6. Meßkette nach Anspruch 5, dadurch gekennzeichnet, daß die Leitungen Koaxialkabel (19) sind.

7. Meßkette nach Anspruch 5, dadurch gekennzeichnet, daß die Leitungen dreiachsige Leitungen (19) sind.

8. Meßkette nach Anspruch 6, dadurch gekennzeichnet, daß der Leiter (P), der zweite Eingang (+) der Erzeugungseinrichtungen (90) und ein Ende der Abschirmung des Koaxialkabels der Primärwicklung des Transformators (21) mit einem Massekontakt verbunden sind.

## Claims

1. Capacitive dimensional measurement chain with linearized output comprising a capacitive sensor (1, 1a) formed by a detection electrode (10) and a guard electrode (11) surrounding the detection electrode, said detection electrode (10) being placed facing a conductive part (P) in order to define a sensor capacitance ($C_{cpt}$), a reference capacitor (6, 6a) powered by a reference alternating voltage source (7, 7a) deriving a reference signal (Vr), means (90) for producing an amplitude modulated signal ($Va_{me}$) as a function of a difference ($I_{er} = I_r - I_{cpt}$) between currents respectively crossing the sensor capacitance ($C_{cpt}$) and the reference capacitor (6, 6a), and means for amplifying and demodulating (9) said amplitude modulated signal ($Va_{me}$) into a distance measurement signal ($V_e$) linearly representative of a distance (e) between the detection electrode (10) and said conductive part (P), said chain comprises two alternating voltage sources (2, 2a, 2′a) providing signals ($V_p$, $V'_p$) which have a same amplitude, that have frequencies and phases equal to those of the reference signal and which respectively power the detection electrode (10) and the guard electrode (11), said two sources (2, 2a, 2′a) being level-controlled by said distance measuring signal ($V_e$).

2. Measurement chain according to claim 1, characterized in that it further comprises

a time base (8a) for producing a clock signal (H) for synchronizing the operation of the three voltage sources (2a, 2′a, 7a) and also demodulating means (92) included in the amplifying and demodulating means (9), and

means (93) for integrating the distance measurement signal ($V_e$).

3. Measurement chain according to claim 1 or 2, characterized in that the reference capacitor (6a) is of adjustable type.

4. Measurement chain according to any one of claims 1 to 3, characterized in that the reference source (7a) is of adjustable level type.

5. Measurement chain according to any one of claims 1 to 4, characterized in that

said two alternating voltage sources (2, 2a), (2′a) are comprised by the secondary winding of a transformer (21) having primary and secondary windings made in respective coaxial cables,

the secondary winding is disposed in series between the sensor (1a) and the producing means (90) via electric links (19),

a central conductor of the secondary winding coaxial cable has an end connected to the detection electrode (10) and has another end connected to a first input (-) of the producing means (90),

a shielding of the secondary winding coaxial cable has an end connected to the guard electrode (11) and has another end connected to a second input (+) of the producing means (90), and

a central conductor of the primary winding coaxial cable of the transformer (21) is powered by said produced distance measurement signal via a synchronous modulator (20a) synchronized with the reference source (7a).

6. Measurement chain according to claim 5, characterized in that the links are coaxial cables (19).

7. Measurement chain according to claim 5, characterized in that the links are triaxial links (13).

8. Measurement chain according to claim 6, characterized in that the part (P), the second input (+) of the producing means (90) and one of the ends of a shielding of the primary winding coaxial cable of the transformer (21) are connected to a ground terminal.

**FIG.1**

(TECHNIQUE ANTERIEURE)

**FIG.2**

*FIG.3*